# EUROPÄISCHE PATENTANMELDUNG

(11) **EP 4 092 496 A1**
(43) Veröffentlichungstag der Anmeldung: **23.11.2022**
(21) Anmeldenummer: 21174727.4
(22) Anmeldetag: 19.05.2021
(51) Int. Cl.: G05B 19/042, G06N 20/20, G05B 23/02

(54) **ENGINEERING-SYSTEM ZUM PROJEKTIEREN EINER BEDIEN-BEOBACHTUNGSSICHT FÜR EINE AUTOMATISIERUNGSEINRICHTUNG**

(71) Anmelder: Siemens Aktiengesellschaft, 80333 München (DE)
(72) Erfinder: Kiss, Monika, 90491 Nürnberg (DE)

(57) **Zusammenfassung**

Die Erfindung betrifft ein Engineering-System (1) zum Projektieren einer Bedien-Beobachtungssicht für eine Automatisierungseinrichtung in zumindest einem Anlagenbild (S) umfassend einen Bildeditor (2) ausgestaltet aus unterschiedlichen Objektarten (OA) Objekte (O1,...,O6) auszuwählen und in ein Anlagenbild (S) zu platzieren, wobei die Objekte (O1,...,O6) eine Vielzahl von Objekteigenschaften (Pi) aufweisen, und der Bildeditor (2) ausgestaltet ist, über ein Dialogfenster (KM) die Objekteigenschaften (Pi) anzuzeigen, wobei mittels eines Datenloggers (3) während der Projektierung die Auswahl eines Objektes (O1,...,O6), dessen Objektart (OA) und die Eingabe von Eigenschaftswerten (Vi) für die Objekteigenschaften (Pi) des Objektes (O1,...,O6) als einen Datensatz (Dk) aufgenommen wird und für ein maschinelles Lernen einer Lerneinheit (5) bereitgestellt wird, wobei die Lerneinheit (5) weiterhin dazu ausgestaltet ist, ein Vorhersagemodell (6) zu erstellen, wobei das Vorhersagemodell (6) für eine Objektart (OA) Informationen über die bevorzugten Objekteigenschaften (Pi) aufweist, wobei das Dialogfenster (KM) eine Favoritenliste (FL) aufweist, welche auf Grundlage des Vorhersagemodells (6) die meistgenutzten Objekteigenschaften (Pi) anzeigt.

## Beschreibung

Die Erfindung betrifft ein Engineering-System zum Projektieren einer Bedien-Beobachtungssicht für eine Automatisierungseinrichtung in zumindest einem Anlagenbild umfassend einen Bildeditor ausgestaltet aus unterschiedlichen Objektarten Objekte auszuwählen und in ein Anlagenbild zu platzieren, wobei die Objekte eine Vielzahl von Objekteigenschaften aufweisen, und der Bildeditor ausgestaltet ist über ein Dialogfenster die Objekteigenschaften anzuzeigen, wobei in dem Dialogfenster den Objekteigenschaften ein Eingabefeld zugeordnet ist, in welches ein Eigenschaftswert eingebbar ist.

Bereits aus dem Siemens-Katalog ST 80, Ausgabe 2009 ist ein Engineering-System sowie ferner ein Bedien- und Beobachtungssystem mit geeigneter Software bekannt, dass zum Bedienen und Beobachten von zu steuernden technischen Prozessen bzw. von Fertigungsabläufen einer Anlage oder einer Maschine vorgesehen ist. Gewöhnlich wird dazu auf dem Engineering-System, im Rahmen eines Automatisierungsprojektes eine Vielzahl von mehreren Bildobjekten aufweisenden Prozessbildern erstellt, die den zu steuernden technischen Prozess oder Teile dieses Prozesses repräsentieren.

In der EP 2 093 663 A1 ist ein Engineering-System für die Entwicklung eines Projektes und ein entsprechendes Verfahren offenbart, wobei hier das Problem gelöst wird, einem Anwender ein System bereitzustellen, welches ihm erlaubt, mit dem Projekt und den enthaltenen Objekten zu arbeiten, auch wenn er nicht im Besitz aller Engineering-Werkzeuge ist.

Die EP 2 328 050 A1 offenbart ein Verfahren zum Betreiben eines Engineering-Systems und ein Engineering-System, wobei hier ein Verfahren angegebenen wird, welches einen Anwender erlaubt, eine schnellere Auswahl eines Bildobjektes zu ermöglichen.

Die EP 3 396 479 B1 offenbart ein Engineering-System, welches es einem Anwender ermöglicht, zwischen einem Projektierungsfehler und den Auswirkungen eines Delta-Ladens von Runtime-Daten zu unterscheiden.

Bei all den genannten Engineering-Systemen ist es von Nachteil, dass ein Anwender, wenn er ein Objekt in einem Bildeditor bearbeiten will, eine Vielzahl von Eigenschaften des Objektes zur Verfügung stehen. Einem Objekt die richtigen Eigenschaften zuzuweisen ist eine sehr mühsame manuelle Arbeit, vor allem, weil jedem Objekt eine große Liste von Eigenschaften oder Untereigenschaften zur Verfügung stehen.

Es ist Aufgabe der vorliegenden Erfindung, ein Engineering-System anzugeben, welches ein Projektieren von Objekten in einem Bildeditor vereinfacht bzw. dazu führt, dass bei der Projektierung Zeit eingespart werden kann.

Die Aufgabe wird für das eingangs genannte Engineering-System dadurch gelöst, dass ein Datenlogger vorhanden ist, welcher ausgestaltet ist, während der Projektierung die Auswahl eines Objektes, dessen Objektart und die Eingabe von Eigenschaftswerten für die Objekteigenschaften des Objektes als einen Datensatz aufzunehmen, dabei ist weiterhin ein Datenmanager vorhanden, welcher ausgestaltet ist, die Datensätze für ein maschinelles Lernen einer Lerneinheit bereitzustellen, wobei die Lerneinheit weiterhin dazu ausgestaltet ist, ein Vorhersagemodell zu erstellen, wobei das Vorhersagemodell für eine Objektart Informationen über die bevorzugten Objekteigenschaften aufweist, wobei das Dialogfenster eine Favoritenleiste aufweist, welche auf Grundlage des Vorhersagemodells die meist genutzten Objekteigenschaften des ausgewählten Objektes anzeigt.

Mit einer Lerneinheit, einer Maschinenlerneinheit, einem neuronalen Netz oder einer künstlichen Intelligenz KI mit beispielsweise selbstorientierenden Karten, lässt sich ein Verhalten bei der Projektierung von Objekten aufnehmen und es lässt sich dadurch erlernen, welches bei einer Projektierung die bevorzugten Objekte und die bevorzugten Objekteigenschaften sind.

Mit Vorteil kann nun aus den gelernten Datensätzen bei Wiederanwahl eines Objektes in einen Bildeditor in einer Favoritenleiste eingeblendet werden, welche die gewöhnlich verwendeten Objekteigenschaften sind. Ein Benutzer kann dann sofort auf die Favoritenleiste klicken und sagen "Bitte diese Favoriten übernehmen" und das Objekt ist erstellt oder die Objekteigenschaften in der Favoritenleiste direkt konfigurieren. Damit hat ein Anwender oder Projekteur einer Anlage ein gutes Hilfsmittel zur vereinfachten Projektierung erhalten und kann bei der Projektierung viel Zeit sparen.

Eine weitere vorteilhafte Ausgestaltung des Engineering-Systems sieht es vor, dass der Datenmanager ausgestaltet ist, die Datensätze entweder an eine erste Schnittstelle oder an eine zweite Schnittstelle zu übergeben, wobei die erste Schnittstelle ausgestaltet ist, die Datensätze an eine entfernte IT-Infrastruktur, welche als virtuelles Teilsystem in Form einer Dienstleistung die Lerneinheit bereitstellt und das Vorhersagemodell erstellt zu übergeben und die zweite Schnittstelle ausgestaltet ist die Datensätze intern zu verarbeiten. Das Engineering-System erhält damit die Möglichkeit, die Datensätze entweder an einen Dienstleister, welcher in einer Cloud die Funktionalität bereitstellt, zu schicken, weil die Cloud-Provider in der Regel Hochleistungsrechner haben und die Modelle aus einer großen Anzahl von Datensätzen schneller und leichter berechnen können. Aber auch wenn ein Kunde selber einen Hochleistungsrechner hat, so hat er die Möglichkeit selber aus den Datensätzen mittels einer Lerneinheit und umfangreichen KI-Algorithmen ein Vorhersagemodell zu erstellen.

Im Hinblick auf die Möglichkeit der Dienstleistung innerhalb einer Cloud ist es von Vorteil, wenn das Engineering-System derart ausgestaltet ist, dass es von anderen Engineering-Systemen, welche von anderen Anwendern bedient werden, ebenfalls Datensätze erhält. Dazu ist es von Vorteil, wenn das Dialogfenster eine Empfehlungsliste aufweist, welche auf Grundlage von unterschiedlichen Datensätzen die meistgenutzten Objekteigenschaften von ausgewählten Objekten anderer Engineering-Systeme von anderen Anwendern anzeigt.

Im Hinblick auf den allgemeinen Datenschutz und auf eine Datenschutzgrundverordnung ist das Engineering-System vorteilhafterweise mit einem Daten-Schutzmodul ausgestaltet, welches ausgestaltet ist, für den Fall, dass wenn Datensätze von anderen Engineering-Systemen von anderen Anwendern verwendet werden, zu prüfen, ob die entsprechende Datenschutzgrundverordnung eingehalten wurde.

Im Hinblick auf neu herauskommende Versionen einer Engineering-Software, welche eben auf den Engineering-System abläuft, ist es von Vorteil, wenn das Engineering-System ein Anpassungsmodul aufweist, welches ausgestaltet ist, bei einem Software-Update auf eine nächst höhere Version auf Grundlage des vorherigen Vorhersagemodells und neuen Anwendereingaben ein verbessertes Vorhersagemodell zu erstellen. Von Generation zu Generation kann nun das Engineering-System immer weiter verbessert werden "es wird immer schlauer".

Die eingangs genannte Aufgabe wird ebenfalls durch ein Verfahren zum Projektieren einer Bedien-Beobachtungssicht für eine Automatisierungsanlage in zumindest einem Anlagenbild mit einem Engineering-System gelöst. Dabei werden in einem Bildeditor aus unterschiedlichen Objektarten Objekte ausgewählt und in ein Anlagebild platziert, wobei die Objekte eine Vielzahl von Objekteigenschaften aufweisen, und über ein Dialogfenster die Objekteigenschaften der Objekte bei einer Interaktion ausgewählt und angezeigt werden, wobei in dem Dialogfenster für die Objekteigenschaften ein Eingabefeld angezeigt wird, in welches ein Eigenschaftswert eingegeben wird. Um nun einem Anwender oder einem Projekteuer das Projektieren von Bedien-Beobachtungssichten zu erleichtern, wird in dem Engineering-System ein Datenlogger derart betrieben, dass während einer laufenden Projektierung die Auswahl eines Objektes, dessen Objektart und die Eingabe von Eigenschaftswerten für die Objekteigenschaften des Objektes als jeweils ein Datensatz aufgezeichnet wird, wobei die Datensätze mittels eines Datenmanagers einer Lerneinheit für ein maschinelles Lernen bereitgestellt werden, wobei in der Lerneinheit mittels eines Algorithmus ein Vorhersagemodell erstellt wird, wobei das Vorhersagemodell für eine Objektart Informationen über die bevorzugten Objekteigenschaften aufweist, wobei zur Vereinfachung der Projektierung mittels des Dialogfensters eine Favoritenliste eingeblendet wird, welche auf Grundlage des Vorhersagemodells die meist genutzten Objekteigenschaften der ausgewählten Objekte anzeigt.

Nun hat ein Anwender des Engineering-Systems einen schnellen und einfachen Mechanismus an die Hand bekommen, um Bildschirmobjekteigenschaften in HMI-Bildern schneller zu realisieren.

Im Hinblick auf das Ausleiten von Datensätzen an externe Systeme, damit diese schneller und einfacher das maschinelle Lernen übernehmen können bzw. schneller und einfacher Vorhersagemodelle erstellen können, ist es von Vorteil, wenn verfahrensgemäß ein Datenmanager in dem Engineering-System folgendermaßen betrieben wird. Der Datenmanager ist derart konfigurierbar, dass die Datensätze entweder an einer erste Schnittstelle oder an eine zweite Schnittstelle übergeben werden, wobei über die erste Schnittstelle die Datensätze an eine entfernte IT-Infrastruktur übergeben werden, welche als virtuelles Teilsystem in Form einer Dienstleistung die Lerneinheit bereitstellt und anschließend das Vorhersagemodell erstellt und über die zweite Schnittstelle die Datensätze intern verarbeitet werden.

Weiterhin kann ein folgender Verfahrensschritt zusätzlich ausgeführt werden, d.h. an das virtuelle Teilsystem werden Datensätze von anderen Engineering-Systemen, welche von anderen Anwendern betrieben werden, gesendet. Dementsprechend bekommt das virtuelle Teilsystem neue Datenmengen zum erweiternden Lernen. Demnach werden durch das virtuelle Teilsystem von anderen Engineering-Systemen, welche von anderen Anwendern betrieben werden, deren Datensätze bezüglich deren Auswahl eines Objektes, entgegengenommen und auf dieser Grundlage unterschiedliche Vorhersagemodelle erstellt, wobei dann mittels des Dialogfensters eine Empfehlungsliste eingeblendet wird, welche auf Grundlage der unterschiedlichen Datensätze die meist genutzten Objekteigenschaften von ausgewählten Objekten von anderen Engineering-Systemen von anderen Anwendern anzeigt.

Im Hinblick auf gesetzliche Vorgaben für den Datenschutz ist es von Vorteil, wenn ein Datenschutzmodul derart betrieben wird, dass für den Fall, dass wenn Vorhersagemodelle von anderen Engineering-Systemen von anderen Anwendern verwendet werden, geprüft wird, ob die entsprechenden Datenschutzgrundverordnungen eingehalten wurden.

Auch ist es vorteilhaft, wenn ein Anpassungsmodul derart betrieben wird, dass bei einem Software-Update auf eine nächst höhere Version auf Grundlage des vorherigen Vorhersagemodells und neuen Anwendereingaben ein verbessertes Vorhersagemodell erstellt wird.

Die Zeichnung zeigt ein Ausführungsbeispiel der Erfindung, dabei zeigt
- FIG 1: schematisch das erfindungsgemäße Prinzip,
- FIG 2: ein Engineering-System in einem Blockschaltbild,
- FIG 3: ein Engineering-System verbunden über eine Cloud mit anderen Engineering-Systemen,
- FIG 4: eine Wissensdatenbank für Objekte und deren Objekteigenschaften,
- FIG 5: ein Dialogfenster in einer ersten Darstellung und
- FIG 6: das Dialogfenster in einer zweiten Darstellung.

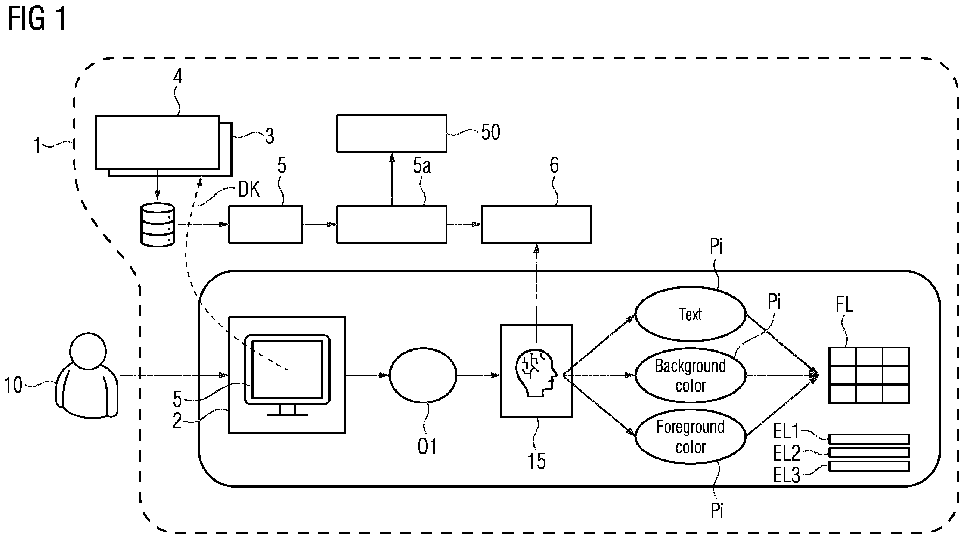

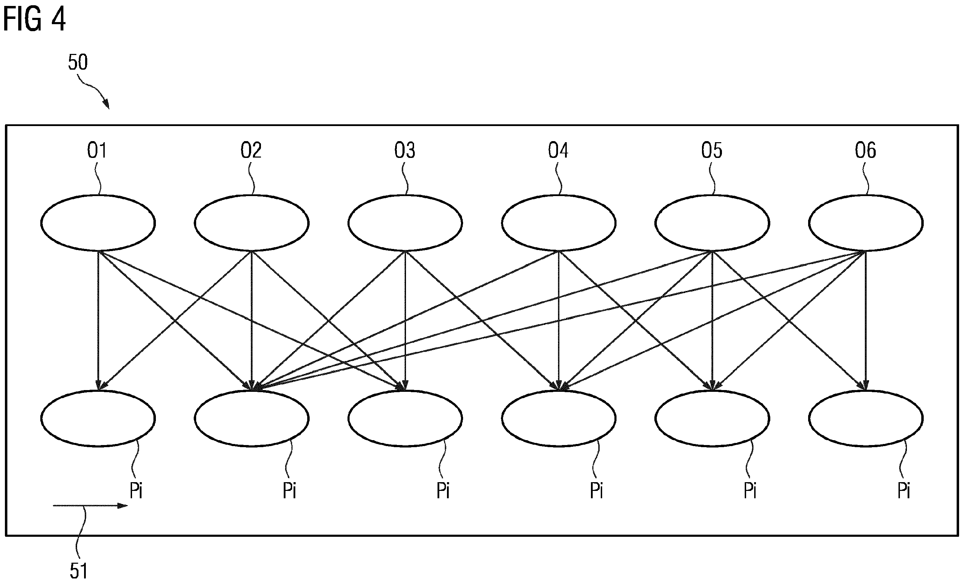

Gemäß FIG 1 ist das Prinzip zur Vereinfachung der Projektierung für einen Projekteur 10 mit einem Engineering-System 1 dargestellt. Sobald ein Projekteur 10 in einem Bildeditor 2 ein Anlagenbild S erstellt, wird er in einer Lernphase diverse, mehrere Objekte in das Anlagenbild S platzieren. Im Hintergrund läuft dazu ein Datenlogger 3, welcher dazu ausgestaltet ist, während der Projektierung die Auswahl eines Objektes O1,...,O6 (siehe auch FIG 4), dessen Objektart OA und die Eingabe von Eigenschaftswerten Vi für die Objekteigenschaften Pi des Objektes O1,...,O6 als einen Datensatz Dk aufzunehmen. Ein Datenmanager 4, welcher ausgestaltet ist die Datensätze Dk für ein maschinelles Lernen an eine Lerneinheit 5 bereitzustellen, wird ebenfalls in dem Engineering-System 1 verwendet. Die Lerneinheit 5 ist dazu ausgestaltet, ein Vorhersagemodel 6, beispielsweise durch maschinelles Lernen 5a (neuronale Netze, KI) zu erstellen, wobei das Vorhersagemodell 6 für eine Objektart OA Informationen über die bevorzugten Objekteigenschaften Pi aufweist. Würde nun nach einer erfolgreichen Lernphase mit einen bereits existierenden Vorhersagemodell 6 nun der Anwender 10 ein Objekt O1,...,O6 in den Bildeditor 2 hineinziehen, öffnet sich automatisch ein dazugehöriges Dialogfenster KM, nun wird anhand eines KI-Entscheiders 15, welcher auf das Vorhersagemodell 6 zugreift, in dem Dialogfenster KM eine Favoritenleiste FL eingeblendet, welche auf Grundlage des Vorhersagemodells 6 die meist genutzten Objekteigenschaften Pi des jeweils angezeigten Objektes O1,...,O6 anzeigt.

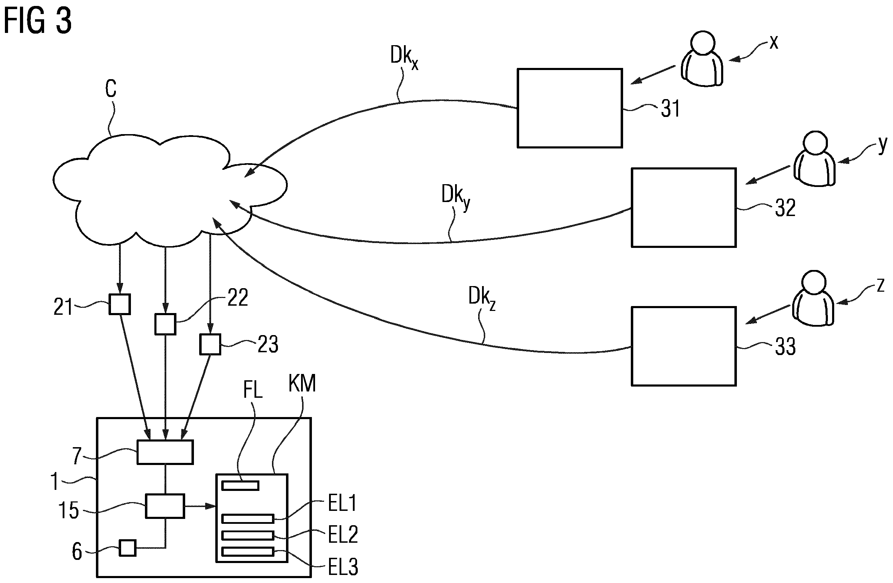

Für den Fall, dass sich mehrere Engineering-Systeme 31,32,33 zusammenschließen, können in dem Dialogfenster KM eine erste Empfehlungsliste EL1, eine zweite Empfehlungsliste EL2 und eine dritte Empfehlungsliste EL3 angezeigt werden (siehe hierzu FIG 3).

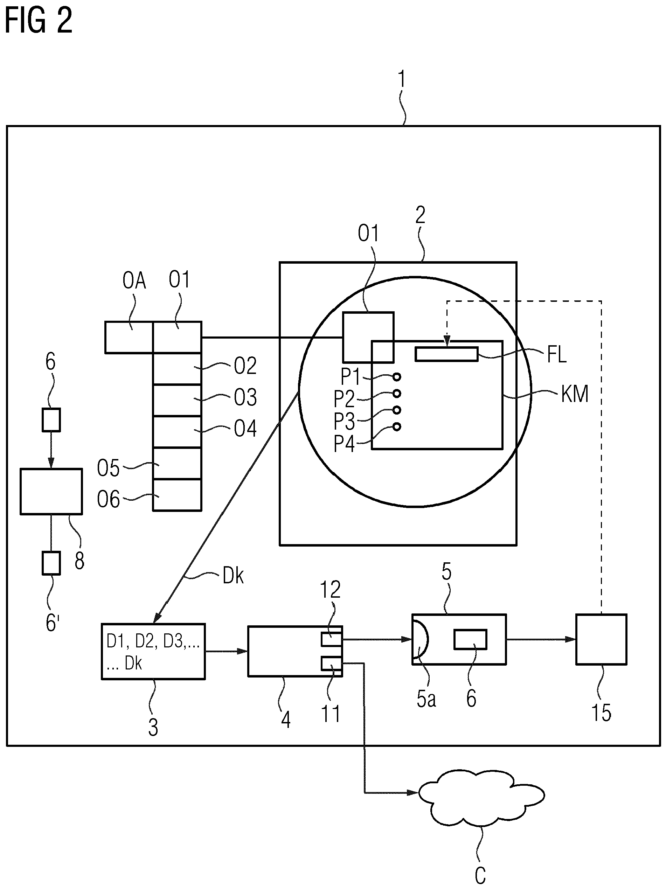

Gemäß der FIG 2 ist ein Blockschaltbild eines Engineering-Systems 1 dargestellt. In dem Bildeditor 2 können aus unterschiedlichen Objektarten OA Objekte O1,...,O6 platziert werden. Da die Objekte O1,...,O6 in der Regel eine Vielzahl von Objekteigenschaften Pi aufweisen, ist es für einen Anwender immer wieder sehr mühselig sich die passenden Objekteigenschaften Pi herauszusuchen. Erfindungsgemäß wird nun anhand von gelernten Datensätzen DK in dem Dialogfenster KM eine Favoritenleiste FL für die meistbenutzten Objekteigenschaften Pi eingeblendet. Sollte der Anwender in der Favoritenleiste FL seine passenden Objekteigenschaften Pi finden, so kann er es einfach einstellen, konfigurieren oder übernehmen.

Das Engineering-System 1 weist einen Datenlogger 3 auf, welcher ausgestaltet ist, während der Projektierung die Auswahl eines Objektes, dessen Objektpfad und die Eingabe von Eigenschaftswerten Vi für die Objekteigenschaften Pi des Objektes O1,...,O6 als einen Datensatz DK aufzunehmen. Diese Datensätze D1,D2,D3,...,DK werden einem Datenmanager 4 zur Verfügung gestellt, welcher ausgestaltet ist, die Datensätze für ein maschinelles Lernen einer Lerneinheit 5 zu übergeben. Die Lerneinheit 5 weist ein maschinelles Lernen 5a (Algorithmus, KI) auf. Die Lerneinheit 5 ist weiterhin dazu ausgestaltet ein Vorhersagemodell 6 zu erstellen, wobei das Vorhersagemodell 6 für eine Objektart OA Informationen über die bevorzugten Objekteigenschaften Pi aufweist.

Auf Grundlage des Vorhersagemodells 6 wird der KI-Entscheider 15 bei einem Aufblenden des Dialogfensters KM für ein Objekt O1 in das Dialogfenster KM die Favoritenleiste FL einblenden.

Für einen späteren Verbund mit weiteren Engineering-Systemen 31,32,33 (x,y,z) und für ein Ausladen der Datensätze DK x,y,z zur Berechnung in einen virtuellen Filesystem ist es von Vorteil, wenn der Datenmanager 4 neben einer zweiten Schnittstelle 12 für den Innenbetrieb eine erste Schnittstelle 11 für den Betrieb an einer entfernten IT-Strukturaufweist.

Gemäß FIG 3 ist das Engineering-System 1 und drei weitere Engineering-Systeme 31,32,33, nämlich ein erstes Engineering-System 31, ein zweites Engineering-System 32 und ein drittes Engineering-System 33 dargestellt. Die Engineering-Systeme 31,32,33 werden jeweils von unterschiedlichen Anwendern x,y,z bedient. Die unterschiedlichen Engineering-Systeme 31,32,33 können ihre unterschiedlichen Datensätze DKx,DKy,DKz an das virtuelle Teilsystem C senden. Das virtuelle Teilsystem C in Form von einer Cloud bzw. einer externen IT-Infrastruktur die solche Rechendienstleistungen zur Verfügung stellt, ist ausgestaltet aus den Datensätzen DKx,DKy,DKz entweder weitere Vorhersagemodelle 21,22,23 zur Verfügung zu stellen, wobei damit nun ein erstes Vorhersagemodell 21 von dem Anwender x, ein zweites Vorhersagemodell 22 von dem Anwender y und ein drittes Vorhersagemodell 23 von dem Anwender z existiert oder das bereits vorhandene Vorhersagemodell 6 zu verbessern.

Die in dem virtuellen Teilsystem C (Cloud) generierten Vorhersagemodelle 21,22,23 oder das eigene verbesserte Vorhersagemodell werden dem eigenen Engineering-System 1 über ein Datenschutzmodul 7 zur Verfügung gestellt. Auch hier kann über den KI-Entscheider 15 zusätzlich mit Hilfe des eigenen Vorhersagemodells 6 oder der anderen Vorhersagemodelle 21,22,23 neben der Favoritenleiste FL im Dialogfenster KM zusätzlich die erste Empfehlungsliste EL1 und die zweite Empfehlungsliste EL2 und die dritte Empfehlungsliste EL3, welche auf Eingaben von anderen Anlagenbetreibern x,y,z beruhen, eingeblendet werden. Es ist auch möglich, nur eine Empfehlungsliste einzublenden, welche die Angaben von enthält.

Die FIG 4 zeigt eine Wissensdatenbank 50, wobei über Pfeile, entsprechend Häufigkeitszuordnungen 51 zugewiesen sind. Ein erstes Objekt O1 steht beispielsweise für die Objektart "Textfeld", ein zweites Objekt O2 steht beispielsweise für die Objektart "Button", ein drittes Objekt O3 steht beispielsweise für die Objektart "I/O-Field", ein viertes Objekt O4 steht beispielsweise für die Objektart "Gauge", ein fünftes Objekt O5 steht beispielsweise für die Objektart "Balken" und ein sechstes Objekt O6 steht für die Objektart "Slider". Die Häufigkeitszuordnungen 51 zeigen von den Objekten O1,...,O6 auf entsprechende Objekteigenschaften Pi. Die Objekteigenschaften Pi von links nach rechts, entsprechen beispielsweise den Eigenschaften "Text", "background color", "foreground color", "process value", "minimum value" und "maximum value".

Das maschinelle Lernen 5a hat in der Lerneinheit 5 ergeben, dass dem ersten Objekt O1, also dem Textfeld am häufigsten die Objekteigenschaften "Text", "Background color" und "Foreground color" zugeordnet wurden. Damit kann in einer Favoritenliste FL sofort die entsprechenden Objekteigenschaften für dieses Objekt einem Projekteur 10 angeboten werden.

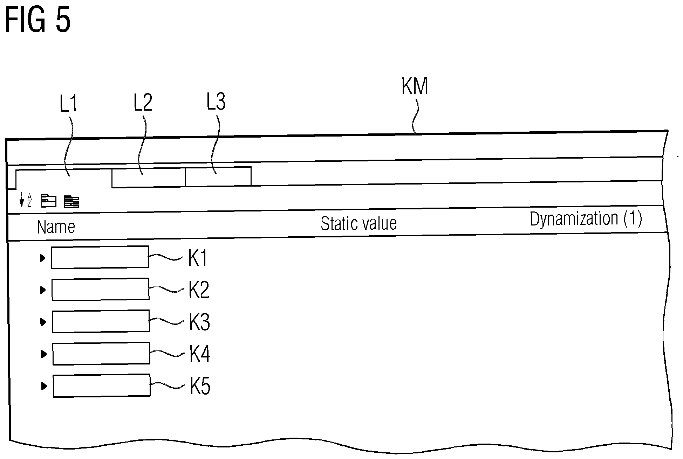

Die FIG 5 zeigt ein Beispiel eines Dialogfensters KM. Das Dialogfenster KM weist eine erste Lasche L1, eine zweite Lasche L2 und eine dritte Lasche L3 auf. Die erste Lasche L1 zeigt die Objekteigenschaften, die zweite Lasche L2 zeigt speziell verschaltbare Objekteigenschaften von Ereignissen und die dritte Lasche L3 zeigt eine Dynamisierung von Eigenschaften mittels Variablen, Skripten, usw..

In der ersten Lasche L1 werden eine erste Kategorie K1, eine zweite Kategorie K2, eine dritte Kategorie K3, eine vierte Kategorie K4 und eine fünfte Kategorie K5 angezeigt. Kategorie K1 = "General", Kategorie K2 = "Appearance", Kategorie K3 = "Miscellaneous", Kategorie K4 = "Security" und Kategorie K5 = "Size and Position".

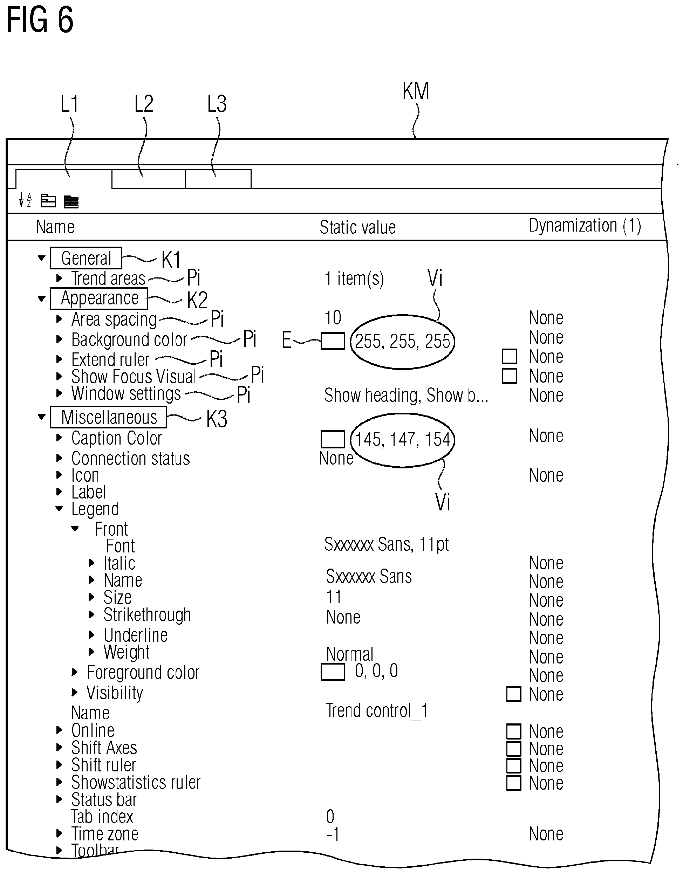

Die FIG 6 zeigt das in FIG 5 bereits gezeigte Dialogfenster KM in einer "aufgeklappten" Darstellung. Die erste Kategorie K1 "General" und die zweite Kategorie K2 " Appearance" und die dritte Kategorie K3 "Miscellaneous" sind aufgeklappt. Bei der zweiten Kategorie K2 können Objekteigenschaften Pi angewählt werden zu den Objekteigenschaften sind in dem Dialogfenster KM auch Eingabefelder E platziert. Mit diesen Eingabefeldern E kann man Eigenschaftswerte Vi übergeben.

## Patentansprüche

1. Engineering-System (1) zum Projektieren einer Bedien-Beobachtungssicht für eine Automatisierungseinrichtung in zumindest einem Anlagenbild (S) umfassend
einen Bildeditor (2) ausgestaltet aus unterschiedlichen Objektarten (OA) Objekte (O1,...,O6) auszuwählen und in ein Anlagenbild (S) zu platzieren,
wobei die Objekte (O1,...,O6) eine Vielzahl von Objekteigenschaften (Pi) aufweisen, und der Bildeditor (2) ausgestaltet ist, über ein Dialogfenster (KM) die Objekteigenschaften (Pi) anzuzeigen, wobei in dem Dialogfenster (KM) den Objekteigenschaften (Pi) ein Eingabefeld (E) zugeordnet ist, in welches ein Eigenschaftswert (Vi) eingebbar ist,
**gekennzeichnet durch**
einen Datenlogger (3), welcher ausgestaltet ist während der Projektierung die Auswahl eines Objektes (O1,...,O6), dessen Objektart (OA) und die Eingabe von Eigenschaftswerten (Vi) für die Objekteigenschaften (Pi) des Objektes (O1,...,O6) als einen Datensatz (Dk) aufzunehmen,
einen Datenmanager (4), welcher ausgestaltet ist die Datensätze (Dk) für ein maschinelles Lernen einer Lerneinheit (5) bereitzustellen, wobei die Lerneinheit (5) weiterhin dazu ausgestaltet ist,
ein Vorhersagemodell (6) zu erstellen, wobei das Vorhersagemodell (6) für eine Objektart (OA) Informationen über die bevorzugten Objekteigenschaften (Pi) aufweist,
wobei das Dialogfenster (KM) eine Favoritenliste (FL) aufweist, welche auf Grundlage des Vorhersagemodells (6) die meist genutzten Objekteigenschaften (Pi) des ausgewählten Objektes (O1,...,O6) anzeigt.

2. Engineering-System (1) nach Anspruch 1, wobei der Datenmanager (3) ausgestaltet ist die Datensätze (Dk) entweder an eine erste Schnittstelle (11) oder eine zweite Schnittstelle (12) zu übergeben, wobei
- die erste Schnittstelle (11) ausgestaltet ist die Datensätze (Dk) an eine entfernte IT-Infrastruktur, welche als virtuelles Teilsystem (c) in Form einer Dienstleistung die Lerneinheit (5) bereitgestellt und das Vorhersagemodell (6) erstellt und
- die zweite Schnittstelle (12) ausgestaltet ist die Datensätze (Dk) intern zu verarbeiten.

3. Engineering-System (1) nach Anspruch 1 oder 2, wobei das Dialogfenster (KM) eine Empfehlungsliste (EL) aufweist, welche auf Grundlage von unterschiedlichen Datensätzen (Dkx,Dky,Dkz) die meistgenutzten Objekteigenschaften (Pi) von anderen Engineering-Systemen (31,32,33) von ausgewählten Objekten (O1,...,O6) anderer Anwender (x,y,z) anzeigt.

4. Engineering-System (1) nach Anspruch 3, aufweisend ein Datenschutz-Modul (7), welches ausgestaltet ist für den Fall, dass wenn Datensätze (Dkx,Dky,Dkz) von anderen Engineering-Systemen (31,32,33) von anderen Anwendern (x,y,z) verwendet werden, zu prüfen, ob die entsprechende Datenschutz-Grundverordnung eingehalten wurde.

5. Engineering-System (1) nach einem der Ansprüche 1 bis 4, aufweisend ein Anpassungsmodul (8), welches ausgestaltet ist, bei einem Software-Update auf eine nächst höhere Version auf Grundlage des vorherigen Vorhersagemodells (6) und neuen Anwendereingaben ein verbessertes Vorhersagemodell (6') zu erstellen.

6. Verfahren zum Projektieren einer Bedien-Beobachtungssicht für eine Automatisierungseinrichtung in zumindest einem Anlagenbild (S) mit einem Engineering-System (1), wobei in einem Bildeditor (2) aus unterschiedlichen Objektarten (OA) Objekte (O1,...,O6) ausgewählt werden und in ein Anlagenbild (S) platziert werden,
wobei die Objekte (O1,...,O6) eine Vielzahl von Objekteigenschaften (Pi) aufweisen, und über ein Dialogfenster (KM) die Objekteigenschaften (Pi) der Objekte (O1,...,O6) bei einer Interaktion ausgewählt und angezeigt werden, wobei in dem Dialogfenster (KM) für die Objekteigenschaften (Pi) ein Eingabefeld (E) angezeigt wird, in welches ein Eigenschaftswert (Vi) eingegeben wird,
**dadurch gekennzeichnet, dass**
in dem Engineering-System (1) ein Datenlogger (3) derart betrieben wird, dass während einer laufenden Projektierung die Auswahl eines Objektes (O1,...,O6), dessen Objektart (OA) und die Eingabe von Eigenschaftswerten (Vi) für die Objekteigenschaften (Pi) des Objektes (O1,...,O6) jeweils als ein Datensatz (Dk) aufgezeichnet wird, wobei die Datensätze (Dk) mittels eines Datenmanagers (4) einer Lerneinheit (5) für ein maschinelles Lernen bereitgestellt werden, wobei in der Lerneinheit (5) mittels eines Algorithmus ein Vorhersagemodell (6) erstellt wird, wobei das Vorhersagemodell (6) für eine Objektart (OA) Informationen über die bevorzugten Objekteigenschaften (Pi) aufweist, wobei zur Vereinfachung der Projektierung mittels des Dialogfensters (KM) eine Favoritenliste (FL) eingeblendet wird, welche auf Grundlage des Vorhersagemodells (6) die meistgenutzten Objekteigenschaften (Pi) des augewählten Objektes (O1,...,O6) anzeigt.

7. Verfahren nach Anspruch 6, wobei der Datenmanager (3) konfigurierbar ist die Datensätze (Dk) entweder an eine erste Schnittstelle (11) oder eine zweite Schnittstelle (12) zu übergeben, wobei über
- die erste Schnittstelle (11) die Datensätze (Dk) an eine entfernte IT-Infrastruktur übergeben werden, welche als virtuelles Teilsystem (c) in Form einer Dienstleistung die Lerneinheit (5) bereitstellt und anschließend das Vorhersagemodell (6) erstellt und
- über die zweite Schnittstelle (12) die die Datensätze (Dk) intern verarbeitet werden.

8. Verfahren nach Anspruch 7, wobei an das virtuelle Teilsystem (C) von anderen Engineering-Systemen (31,32,33), welche von anderen Anwendern (x,y,z) betrieben werden, deren Datensätze (Dkx,Dky,Dkz) bezüglich deren Auswahl eines Objektes (O1,...,O6), entgegen nimmt und auf dieser Grundlage das Vorhersagemodell (6) erstellt,
wobei dann mittels des Dialogfensters (KM) eine Empfehlungsliste (EL) eingeblendet wird, welche auf Grundlage des Vorhersagemodells (6) die meistgenutzten Objekteigenschaften (Pi) von ausgewählten Objekten (O1,...,O6) von anderen Engineering-Systemen (31,32,33) von anderen Anwendern (x,y,z) anzeigt.

9. Verfahren nach Anspruch 7 oder 8, wobei ein DatenschutzModul (7) derart betrieben wird, dass für den Fall, dass wenn Datensätze (Dkx,Dky,Dkz) von anderen Engineering-Systemen (31,32,33) von anderen Anwendern (x,y,z) verwendet werden, geprüft wird, ob die entsprechende Datenschutz-Grundverordnung eingehalten wurden.

10. Verfahren nach einem der Ansprüche 6 bis 9, wobei ein Anpassungsmodul (8) derart betrieben wird, dass bei einem Software-Update auf eine nächst höhere Version auf Grundlage des vorherigen Vorhersagemodells (6) und neuen Anwendereingaben ein verbessertes Vorhersagemodell (6') erstellt wird.
